# DEMANDE DE BREVET EUROPEEN

(11) **EP 1 460 335 A1**
(43) Date de publication de la demande: **22.09.2004**
(21) Numéro de dépôt: 04290552.1
(22) Date de dépôt: 01.03.2004
(51) Int. Cl.: F21V 3/04, B60Q 1/14, B60Q 1/10

(54) **Glace pour dispositif d'éclairage et/ou de signalisation du type projecteur pour véhicule automobile**

(30) Priorité: 14.03.2003 FR 0303213
(71) Demandeur: VALEO VISION, 93012 Bobigny Cédex (FR)
(72) Inventeur: Leleve, Joel, 93800 Epinay sur Seine (FR)
(74) Mandataire: Renous Chan, Véronique

(57) **Abrégé**

L'invention a pour objet une glace(2) pour dispositif (1) d'éclairage et/ou de signalisation pour véhicule automobile, ladite glace étant à base de matériau(x) essentiellement transparent(s) au rayonnement visible . La glace comprend au moins un insert (3) en un(des) matériau(x) différent(s) qui est (sont) au moins partiellement transparent(s) à au moins une partie du rayonnement infrarouge, notamment au-delà de 3 micromètres.

## Description

La présente invention a pour objet un dispositif d'éclairage et/ou de signalisation, du type projecteur, pour véhicule automobile.

On a de plus en plus recours, dans ce domaine, à l'utilisation de caméras pour améliorer le confort de conduite, la sécurité ou la vision du conducteur du véhicule. Il est ainsi connu d'utiliser des caméras dites thermiques, en comprenant sous ce terme les caméras susceptibles de mesurer des rayonnements infrarouges d'au moins 3 micromètres, notamment aux environs de 5 à 12 micromètres. En effet, ce type de caméra peut permettre de restituer l'image d'une scène uniquement par mesure de la température des objets/personnes situés dans cette scène. L'image obtenue s'apparente généralement à une image noir et blanc en négatif. Avec de l'habitude, ou après un traitement numérique approprié de l'image, il est alors possible pour le conducteur utilisant cette caméra de nuit, à bord de son véhicule, d'évaluer la présence d'obstacles ou de personnes au-delà de la limite de portée des projecteurs, sans apport d'éclairage complémentaire.

Jusqu'à présent, il était connu de placer ces caméras hors des projecteurs, notamment derrière la calandre ou dans le pare-choc. Cependant, ces emplacements ne sont pas dénués d'inconvénients. Tout d'abord, l'optique de la caméra, généralement à base de germanium ou de silicium est fragile et coûteuse. Elle va se trouver très exposée à des projections de gravillons, aux intempéries diverses (pluie), d'où un risque de détérioration élevé. Ensuite, il est difficile d'assurer correctement la stabilisation thermique de la caméra. Il est en effet à noter que ce type de caméra nécessite une stabilisation thermique pour limiter les bruits thermiques et les dérives qui viendraient altérer la qualité de l'image restituée par la caméra. Enfin, l'inviolabilité de la caméra n'est pas garantie : il est relativement facile de subtiliser la caméra.

L'invention a donc pour but de remédier à ces inconvénients, notamment en proposant un emplacement plus approprié de la caméra dans le véhicule, notamment par une adaptation du dispositif d'éclairage/signalisation dont celui-ci est équipé.

L'invention a tout d'abord pour objet une glace pour dispositif d'éclairage et/ou de signalisation pour véhicule automobile. Ladite glace est à base de matériau(x) essentiellement transparent(s) au rayonnement visible et elle comprend au moins un insert en un (des) matériau(x) différent(s) qui est (sont) au moins partiellement transparent(s) à au moins une partie du rayonnement infrarouge, notamment au-delà de 3 micromètres.

On a en effet découvert que mettre la caméra thermique dans le dispositif d'éclairage/signalisation (que l'on désignera par la suite sous le terme de projecteur par souci de concision) était nettement plus avantageux que de la disposer dans le pare-choc ou derrière la calandre : la caméra va se trouver protégée mécaniquement. Elle va être également protégée des intempéries. Dans le cas préféré où le projecteur est équipé d'un système de correction d'assiette automatique, la caméra va pouvoir bénéficier de ce réglage. En outre, elle va se trouver dans un espace présentant une certaine stabilité thermique, ce qui est très important pour la fiabilité des images prises. On peut aussi noter que, placée dans le projecteur, la caméra est moins exposée au vol.

Cependant, il y avait un obstacle technique qu'il fallait surmonter pour rendre possible l'incorporation de la caméra à l'intérieur du projecteur : les glaces des projecteurs sont majoritairement en plastique du type polycarbonate, ou plus minoritairement en verre. Dans un cas comme dans l'autre, ces matériaux ne transmettent pas l'infrarouge au-delà de 3 micromètres. L'invention a alors trouvé la solution à ce problème, en adaptant localement la glace de façon à ce qu'elle présente une « fenêtre » Il d'un matériau particulier laissant passer le rayonnement utilisé par la caméra thermique, le reste de la glace restant de préférence constitué d'un matériau standard. On s'éloigne ainsi le moins possible d'une technologie de fabrication de glace maîtrisée, connue.

Avantageusement, les matériaux essentiellement transparent(s) mentionnés plus haut sont à base de verre ou de polymère du type Polycarbonate, éventuellement revêtus de revêtement intérieur du type revêtement anti-buée et/ou de revêtement extérieur du type revêtement de protection mécanique, de protection au rayonnement ultraviolet. Comme déjà évoqué, on continue ainsi à utiliser majoritairement des matériaux bien connus, bien maîtrisés et à coût modéré pour faire la glace

Avantageusement encore, le ou au moins un des inserts est à base de matériau minéral comme le germanium ou le silicium, ou à base de matériau organique, de verre de synthèse notamment, et ce matériau peut être éventuellement muni d'un ou plusieurs revêtements. Il peut s'agir d'une résine spéciale que l'on injecte de façon appropriée avec ou après le moulage du reste de la glace. Le germanium et le silicium laissent en effet passer l'infrarouge dans la gamme de longueurs d'onde utilisées par les caméras thermiques. Comme ils ont par ailleurs un aspect différent du reste de la glace (ils sont peu ou pas transparents dans le rayonnement visible), ces matériaux donnent en plus un effet de style original à la glace, une signature.

De préférence, le ou au moins un des insert(s) est situé à la périphérie de la glace. Cela peut être judicieux tout particulièrement dans le cas où l'insert est en un matériau non transparent dans le visible : en étant à la périphérie de la glace, sa présence ne gêne que de façon très limitée la transmission du faisceau lumineux émis par le projecteur.

Avantageusement, le ou au moins un des insert(s) est associé au reste de la glace par surmoulage, par collage et/ou par fixation mécanique, avec notamment une gorge dans le bord définissant le logement dans lequel est introduit l'insert. La présence de la gorge peut être utilisée pour faciliter la pose de la colle et/ou pour s'adapter à la forme complémentaire du bord de l'insert.

De préférence, le ou au moins un des insert(s) a une résistance mécanique voisine ou identique à celle du reste de la glace. C'est bien sûr intéressant pour éviter que la présence de l'insert ne devienne une zone de faiblesse mécanique de la glace. Le ou au moins un des insert(s) a notamment une épaisseur voisine ou identique à celle du reste de la glace : cette caractéristique facilite la fixation de l'insert dans la glace, elle permet aussi à l'insert d'atteindre une résistance mécanique suffisante.

L'invention a également pour objet un dispositif d'éclairage et/ou de signalisation pour véhicule automobile comprenant un boîtier fermé par la glace à insert(s) décrite précédemment. Le boîtier comprend de préférence une caméra de type thermique, notamment apte à mesurer dans l'infrarouge, au-delà de 3 micromètres, au travers de la glace.

La caméra est de préférence fixée dans le boîtier de façon à ce que son objectif soit dirigé vers l'insert de la glace : c'est tout l'intérêt de la glace à insert décrite plus haut. L'insert est notamment dimensionné en fonction de l'ouverture angulaire de l'objectif de la caméra, de la distance le séparant dudit objectif et de son réglage d'orientation verticale et horizontale. En fonction de ces paramètres, on choisira la dimension d'insert la plus petite possible, aussi bien pour des raisons esthétiques que des raisons optiques (pour limiter la zone de la glace pouvant perturber l'émission du faisceau lumineux du projecteur) ou des raisons de coût (le matériau de l'insert étant nettement plus coûteux que celui du reste de la glace).

L'invention a également pour objet le procédé de fabrication de la glace selon l'invention, qui se caractérise par les étapes suivantes :
- on moule la glace de façon à la munir d'un ou plusieurs logements,
- on insère dans le ou chaque logement le ou chacun des inserts, par surmoulage, collage et/ou fixation mécanique.

L'invention a également pour objet le véhicule muni d'au moins un tel dispositif d'éclairage/signalisation.

L'invention sera détaillée ci-après avec un exemple non limitatif, à l'aide de la figure suivante :

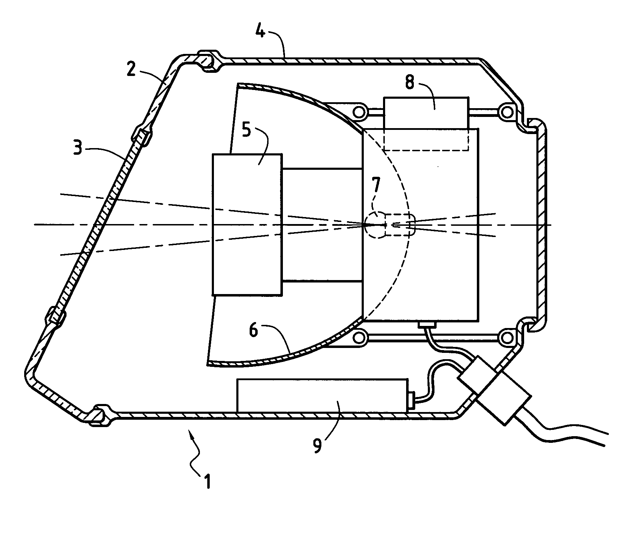

- **fig. 1** : une représentation schématique en coupe d'un projecteur selon l'invention

La figure 1 est donc une représentation très schématique d'un projecteur 1 selon l'invention en coupe transversale. Le projecteur 1 comprend un boîtier 4 fermé par une glace 2 en polycarbonate et munie d'un insert 3 en silicium. Il est également muni d'un réflecteur 6 associé à une source lumineuse 7. Une caméra thermique 5 mesurant les rayonnements dans l'infra rouge lointain, vers 5 micromètres ou vers 8 à 11 micromètres est installée à l'intérieur du boîtier et solidarisée au réflecteur. C'est un type de caméra par exemple commercialisé par la société Raytheon. Le boîtier comprend aussi un système de correction d'assiette 8, et, très schématiquement, sont représentés des moyens de commande électronique 9 du système de correction d'assiette. On a disposé l'objectif de la caméra en face de l'insert à une distance donnée pour définir la taille de l'insert adapté à l'ouverture angulaire de l'objectif. En pratique, on choisit des inserts de dimensions aussi petites que possibles. En effet, si l'on prend des inserts en silicium, ceux-ci sont pas ou peu transparents dans le visible à des épaisseurs nécessaires pour avoir une résistance mécanique suffisante, et il est donc préférable de pénaliser le moins possible les performances optiques du faisceau lumineux émis par la source lumineuse 7. C'est aussi la raison pour laquelle il est judicieux de localiser les inserts à la périphérie de la glace. L'insert est ici sous forme d'un disque s'adaptant au logement prévu dans la glace lors de son moulage. A la place d'un disque, on peut bien sûr choisir une autre forme géométrique, soit pour s'adapter à la forme de l'objectif soit pour toute autre considération, de facilité de fabrication par exemple, ou esthétique. On peut prévoir de recouvrir la glace, incluant ou non l'insert, d'un ou plusieurs revêtements (anti-gravillons, anti-rayures, anti-buée...). Si ces revêtements couvrent aussi l'insert, ils doivent alors être capables de transmettre eux aussi tout ou partie de l'infra rouge lointain émis par la caméra. L'insert a ici une épaisseur d'environ 2 mm et un diamètre d'environ 20 mm (on a agrandi la taille de l'insert par rapport au reste de la glace par souci de clarté, sans nécessairement donc respecter les proportions entre les différents composants représentés à la figure 1). Le reste de la glace a ici une épaisseur voisine ou identique, de 2 à 3 mm par exemple. Le correcteur permet non seulement de corriger l'assiette en faisant pivoter le réflecteur, mais aussi de garantir la bonne orientation de la caméra qui est fixée à ce réflecteur directement ou non.

L'invention peut s'appliquer en fait à l'utilisation de tout type de caméra qui émet dans des longueurs d'onde qui ne sont pas compatibles avec les matériaux standards constitutifs des glaces : pour chaque type de caméra (par exemple ultra violet ou autre) est à prévoir l'insert avec le matériau approprié.

## Revendications

1. Glace (2) pour dispositif (1) d'éclairage et/ou de signalisation pour véhicule automobile, ladite glace étant à base de matériau(x) essentiellement transparent(s) au rayonnement visible **caractérisé en ce qu'**elle comprend au moins un insert (3) en un (des) matériau(x) différent(s) et qui est (sont) au moins partiellement transparent(s) à au moins une partie du rayonnement infrarouge, notamment au-delà de 3 micromètres.

2. Glace selon la revendication 1, **caractérisé en ce que** le(s) matériau(x) essentiellement transparent(s) est (sont) à base de verre ou de polymère du type Polycarbonate, éventuellement revêtu(s) de revêtement intérieur du type revêtement anti-buée et/ou de revêtement extérieur du type revêtement de protection mécanique, de protection au rayonnement ultraviolet.

3. Glace selon l'une des revendications précédentes, **caractérisé en ce que** le ou au moins un des inserts (3) est à base de matériau minéral comme le germanium ou le silicium, ou à base de matériau organique, et éventuellement muni d'un ou plusieurs revêtements.

4. Glace selon l'une des revendications précédentes, **caractérisé en ce que** le ou au moins un des insert(s) est situé à la périphérie de la glace.

5. Glace selon l'une des revendications précédentes, **caractérisé en ce que** le ou au moins un des insert(s) (3) est associé au reste de la glace (2) par surmoulage, par collage et/ou par fixation mécanique, avec notamment une gorge dans le bord définissant le logement dans lequel est introduit l'insert (3).

6. Glace selon l'une des revendications précédentes, **caractérisé en ce que** le ou au moins un des insert(s) (3) a une résistance mécanique voisine ou identique à celle du reste de la glace (2).

7. Glace selon l'une des revendications précédentes, **caractérisé en ce que** le ou au moins un des insert(s) (3) a une épaisseur voisine ou identique à celle du reste de la glace (2).

8. Dispositif (1) d'éclairage et/ou de signalisation pour véhicule automobile comprenant un boîtier (4) fermé par une glace (2) selon l'une des revendications précédentes, **caractérisé en ce que** ladite glace est conforme à l'une au moins des revendications précédentes.

9. Dispositif selon la revendication 8, **caractérisé en ce que** le boîtier (4) comprend une caméra (5) de type thermique, notamment apte à mesurer dans l'infrarouge, au-delà de 3 micromètres, au travers de la glace (2).

10. Dispositif selon la revendication 9, **caractérisé en ce que** la caméra (5) est fixée dans le boîtier (4) de façon à ce que son objectif soit dirigé vers l'insert (3) de la glace (2).

11. Dispositif selon la revendication 10, **caractérisé en ce que** l'insert (3) est dimensionné en fonction de l'ouverture angulaire de l'objectif de la caméra (5) et de la distance le séparant dudit objectif.

12. Dispositif selon l'une des revendications 9 à 11, **caractérisé en ce qu'**il est muni d'un système de correction d'assiette dynamique.

13. Procédé de fabrication de la glace selon l'une au moins des revendications 1 à 7, **caractérisé en ce que** :
- on moule la glace (2) de façon à la munir d'un ou plusieurs logements,
- on insère dans le ou chaque logement le ou chacun des inserts (3), par surmoulage, collage et/ou fixation mécanique.

14. Véhicule automobile **caractérisé en ce qu'**il est muni d'au moins un dispositif selon l'une au moins des revendications 8 à 12.
